# EUROPEAN PATENT APPLICATION

(11) **EP 1 149 802 A1**
(43) Date of publication of application: **31.10.2001**
(21) Application number: 00201542.8
(22) Date of filing: 28.04.2000
(51) Int. Cl.: C01F 11/18

(54) **Calcium carbonate substantially free of ammonium ions and process for the preparation thereof**

(71) Applicant: AZIENDE CHIMICHE RIUNITE ANGELINI FRANCESCO - A.C.R.A.F. - S.p.A., 00181 Roma (IT)
(72) Inventor: Giannangeli, Marilena, 00181 Roma (IT)
(74) Representative: Marchi, Massimo, Dr.

(57) **Abstract**

Calcium carbonate substantially free of ammonium ions, and process for obtaining the same.

## Description

The present invention relates to calcium carbonate (CaCO₃) which is substantially free of ammonium ions (NH₄⁺).

It is known that commercial calcium carbonate comprises ammonium ions as an impurity.

The attempts made hitherto to remove the abovementioned ion have not given satisfactory results.

Now, it has been surprisingly found that this can be achieved by dissolving calcium carbonate, containing ammonium ions, in water in amounts equal to 50 parts by volume of water per one part by weight of calcium carbonate, bubbling carbon dioxide gas in the aqueous solution thus obtained, and filtering off and drying the product obtained.

Therefore, it is a first object of the present invention to provide calcium carbonate which is substantially free of ammonium ions.

Furthermore, it is second object of the present invention to provide a method for obtaining calcium carbonate which is substantially free of ammonium ions, characterized in that it comprises the steps of
a) dissolving the said calcium carbonate, containing ammonium ions, in water in amounts equal to 50 parts by volume of water per one part by weight of calcium carbonate;
b) bubbling carbon dioxide gas in the aqueous solution obtained in step a);
c) filtering; and
d) drying the product obtained.

The example which follows is given to illustrate the present invention without, however, limiting it in any way.

### EXAMPLE

Calcium carbonate (2 g) with a purity of 99%, containing ammonium ions, was dissolved in water (100 ml) with stirring at 15°C. Carbon dioxide gas was bubbled in the aqueous solution thus obtained for 10 minutes. Finally, this solution was filtered and the product obtained was dried.

Calcium carbonate with an ammonium ion content < 5 ppm (chromatographic analysis using a chromatograph such as a DC-100 Ion Chromatograph) was thus obtained.

## Claims

1. Calcium carbonate which is substantially free of ammonium ions.

2. Method for obtaining calcium carbonate which is substantially free of ammonium ions, **characterized in that** it comprises the steps of
a) dissolving the said calcium carbonate, containing ammonium ions, in water in amounts equal to 50 parts by volume of water per one part by weight of calcium carbonate;
b) bubbling carbon dioxide gas in the aqueous solution obtained in step a);
c) filtering; and
d) drying the product obtained.
